# EUROPEAN PATENT APPLICATION

(11) **EP 4 613 707 A1**
(43) Date of publication of application: **10.09.2025**
(21) Application number: 23885312.1
(22) Date of filing: 18.07.2023
(51) Int. Cl.: C01B 33/12, H01M 4/36, H01M 4/48

(54) **SILICON OXIDE AND METHOD FOR PRODUCING SAME**

(30) Priority: 01.11.2022 JP 2022175246
(71) Applicant: OSAKA Titanium Technologies Co., Ltd., Amagasaki-shi, Hyogo 660-8533 (JP)
(72) Inventor: TAKESHITA, Kohki, Amagasaki-shi,Hyogo 660-8533 (JP)
(74) Representative: TBK
(86) International application number: PCT/JP2023/026221
(87) International publication number: WO 2024/095539

(57) **Abstract**

The objective of the present invention is to provide a method for reducing impurities at an element level such as aluminum in silicon oxide. The method for producing silicon oxide of the present invention includes a water treatment step, a reduced pressure heating step and a sublimation step. In the water treatment step, silicon is brought into contact with water and then dried to obtain water-treated silicon. In the reduced pressure heating step, (a) the water-treated silicon is heated with (b1) silica dioxide, (b2) metal-silicates or (b3) mixtures of metal-oxides and silicon oxide under reduced pressure to generate a gas. In the sublimation step, the gas is sublimated to obtain a solid material.

## Description

### TECHNICAL FIELD

The present invention relates to silicon oxide (including silicon oxide containing a metal element). The present invention also relates to a method for producing silicon oxide.

### BACKGROUND ART

In recent years, silicon monoxide (SiO) has been expected as a negative electrode active material having a large capacity. Silicon monoxide has a drawback of a large irreversible capacity. As a method for reducing the irreversible capacity to increase an efficiency, a vapor-phase lithium pre-doping method is proposed in Japanese Patent Laid-Open No. 2021-52014. The vapor-phase lithium pre-doping method disclosed in this publication is a method of obtaining a lithium-containing silicon oxide (lithium-doped silicon oxide) by doping SiO with lithium in a vapor phase.

### PRIOR ART DOCUMENT

### PATENT DOCUMENT

Patent Document 1: Japanese Patent Application Laid-Open No. 2021-52014
Patent Document 2: Japanese Patent Application Laid-Open No. 2014-86254

### SUMMARY OF THE INVENTION

### PROBLEM TO BE SOLVED BY THE INVENTION

In the method for producing silicon monoxide and the vapor-phase lithium pre-doping method, elements such as aluminum having a low vapor pressure contained in the raw material are vaporized together with silicon monoxide, and therefore, there is a problem that certain impurities remain in silicon oxide which is the target product. The impurities at the element level such as aluminum diffuse in the active material particles in the process of charge and discharge of the battery and precipitate at the grain boundary, thereby promoting pulverization, and further, there is a concern that the cycle characteristics of the battery may deteriorate.

The objective of present invention is to provide a method for reducing impurities at an element level such as aluminum in silicon oxide.

### MEANS FOR SOLVING THE PROBLEMS

The method for producing silicon oxide (including silicon oxide containing a metal element) according to the first aspect of the present invention includes a water treatment step, a reduced pressure heating step, and a sublimation step. In the water treatment step, silicon is brought into contact with water and then dried to obtain water-treated silicon. In the reduced pressure heating step, (a) the water-treated silicon is heated under reduced pressure with at least one compound selected from the group consisting of (b1) silicon dioxide, (b2) metal silicates and (b3) metal oxides to generate a gas. In the sublimation step, the gas is sublimated to obtain a solid material.

As described above, the method for producing silicon oxide includes the water treatment step. This makes it possible to change the aluminum element and the iron element contained in the silicon powder into a form that is less likely to be vaporized in the reduced-pressure heating step. Therefore, in this method for producing silicon oxide, the aluminum element concentration and the iron element concentration in silicon oxide (solid) can be reduced.

The method for producing silicon oxide according to the second aspect of the present invention includes a granulation step, a reduced pressure heating step, and a sublimation step. In the granulation step, a mixture containing (A) silicon and (B) at least one compound selected from the group consisting of (b1) silicon dioxide, (b2) metal silicates and (b3) metal oxides is granulated with water to obtain a granulated material. In the reduced pressure heating step, the granulated material is heated under reduced pressure to generate gas from the granulated material. In the sublimation step, the gas is sublimated to obtain a solid material.

As described above, the method for producing silicon oxide includes the granulation step. In the granulation step, the aluminum element and the iron element contained in the granulated silicon can be changed into a form which is less likely to be vaporized in the reduced pressure heating step by water used for granulation. Therefore, in this method for producing silicon oxide, the aluminum element concentration and the iron element concentration in silicon oxide (solid) can be reduced. In addition, the granulation improves the fluidity and lowers the jettability, and thus the handling during the process is facilitated.

The method for producing silicon oxide according to the third aspect of the present invention includes a charging step, a reduced pressure heating step, and a sublimation step. In the charging step, (A) silicon and (B) mixture containing (A) silicon and (B) at least one compound selected from the group consisting of (b1) silicon dioxide, (b2) metal silicates and (b3) metal oxides are charged into a heat-resistant vessel so that the aluminum element concentration in the mixture is less than 50 ppm by mass concentration, the iron element concentration in the mixture is less than 1000 ppm by mass concentration and the copper element concentration in the mixture is less than 200 ppm by mass concentration. In the reduced pressure heating step, the mixture is heated under reduced pressure to generate a gas from the mixture. In the sublimation step, the gas is sublimated to obtain a solid material.

As described above, the method for producing silicon oxide includes the charging step. In the charging step, the silicon and the mixture are charged into the heat-resistant vessel so that the aluminum element concentration in the mixture is less than 50 ppm by mass concentration, the iron element concentration in the mixture is less than 1000 ppm by mass concentration, and the copper element concentration in the mixture is less than 200 ppm by mass concentration. Therefore, in this method for producing silicon oxide, the aluminum element concentration, the iron element concentration, and the copper element concentration in the lithium-containing silicon oxide (solid) can be sufficiently reduced.

The method for producing silicon oxide according to the fourth aspect of the present invention includes a charging step, a reduced pressure heating step, and a sublimation step. In the charging step, (A) silicon and (B) one or more compounds selected from (b1) silicon dioxide, (b2) metal silicates and (b3) metal oxides are charged into a heat-resistant vessel so that the element ratio O/Si during a reaction is in the range of more than 1 and less than 1.5. The element ratio O/Si during the reaction is preferably less than 1.3, and more preferably less than 1.1, from the viewpoint of maintaining a favorable reaction rate. In the reduced pressure heating step, the compound charged in the heat-resistant vessel is heated under reduced pressure, and a gas is generated from the compound. In the sublimation step, the gas is sublimated to obtain a solid material. The element ratio O/Si during the reaction is a value obtained by dividing the substance amount of O element contained in the raw material charged into the heat-resistant vessel by the substance amount of Si element contained in the raw material charged into the heat-resistant vessel.

As described above, the method for producing silicon oxide includes the charging step. In the charging step, (A) silicon and (B) one or more compounds selected from (b1) silica dioxide, (b2) metal silicates and (b3) metal oxides are charged into the heat-resistant vessel so that the element ratio O/Si during the reaction is in the range of more than 1 and less than 1.5. Therefore, the aluminum element in the raw material reacts with the excess silicon oxide or metal silicate in the heat-resistant vessel and remains in a crucible, which leads to suppression of vaporization of the aluminum element and the iron element, and the concentration of the aluminum element and the iron element in the silicon oxide obtained as the target product can be sufficiently reduced. Since the element ratio O/Si may be in the range of more than 1 and less than 1.5 during the reaction in the heat-resistant vessel, a step (granulation step) or the like that does not affect the element ratio may be performed in the middle. As a specific method for setting the element ratio during the reaction to a target value, a method of mixing and charging raw materials into a heat-resistant vessel in advance so that the element ratio O/Si is in a range of more than 1 and less than 1.5, a method of setting the respective charging amounts of raw materials to be charged per unit time so that the element ratio O/Si is always in a range of more than 1 and less than 1.5, and charging the raw materials into a heat-resistant vessel through different paths, and the like are considered.

The method for producing silicon oxide according to the fifth aspect of the present invention is the method for producing silicon oxide according to any one of the first aspect through the fourth aspect, wherein the heating temperature in the reduced pressure heating step is represented as T_{R}, the melting temperature of the (A) silicon is represented as T_{A}, the lowest melting temperature among the melting temperatures of the (b1) melting temperature of silicon dioxide, the (b2) melting temperature of the metal silicate, and the (b3) melting temperature of metal oxide is represented as T_{BL}, and the highest melting temperature among the melting temperatures of the (b1) melting temperature of silicon dioxide, the (b2) melting temperature of metal silicate, and the (b3) melting temperature of metal oxide is represented as T_{BH}, T_{R} is set to satisfy T_{A}<T_{R}<T_{BL} when T_{A}<T_{BL} is satisfied, T_{R} is set to satisfy T_{BL}<T_{R}<T_{A} when T_{BL}<T_{A}<T_{BH} is satisfied, and T_{R} is set to satisfy T_{BH}<T_{R}<T_{A} when T_{BH}<T_{A} is satisfied.

As described above, in the method for producing silicon oxide, the heating temperature in the reduced pressure heating step is set as described above. Therefore, the heating temperature in the reduced-pressure heating step can be set to a temperature suitable for generating a gas.

The silicon oxide according to the sixth aspect of the present invention has the composition represented by MₓSiO_{y} (wherein M is at least one metal element selected from Li, Na, K, Mg and Ca, y is in the range of more than 0.5 and less than 1.5, x/y is in the range of 0 or more and less than 1, and x is more than 0.). In the silicon oxide, the concentration of aluminum element as an impurity is 150 ppm or less by mass concentration, the concentration of iron element is less than 100 ppm, and the concentration of copper element is less than 100 ppm.

As described above, the concentration of aluminum element as an impurity is 150 ppm or less by mass concentration, the concentration of iron element is less than 100 ppm, and the concentration of copper element is less than 100 ppm. Therefore, when this silicon oxide is used as a negative electrode active material, it is expected to suppress pulverization in the process of charge and discharge, and to suppress a decrease in cycle characteristics of a battery.

The median diameter of the silicon oxide measured with a laser diffraction particle size distribution analyzer is preferably in the range of 0.5 µm or more and 30 µm or less. This is because when this silicon oxide is used as a negative electrode active material, not only the decrease in the coulomb ratio can be suppressed, but also pulverization can be suppressed to suppress the decrease in the cycle characteristics of the negative electrode.

In the above-described silicon oxide, at least a part of the surface is preferably covered with a conductive carbon coating. In such a case, the mass percentage of carbon in the conductive carbon coating to the mass of silicon oxide is preferably in the range of 0.5 mass% or more and 20 mass% or less. This is because when this silicon oxide is used as a negative electrode active material, it is possible to impart good conductivity to the silicon oxide while maintaining good charge and discharge capacity, and it is possible to suppress side reactions of the silicon oxide.

The above-described silicon oxide preferably has a BET specific surface area in the range of 1m²/g or more and 6m²/g or less. This is because when this silicon oxide is used as a negative electrode active material, it is possible to suppress the decrease in the coulomb efficiency while maintaining the output characteristics well.

### BRIEF DESCRIPTION OF THE DRAWINGS

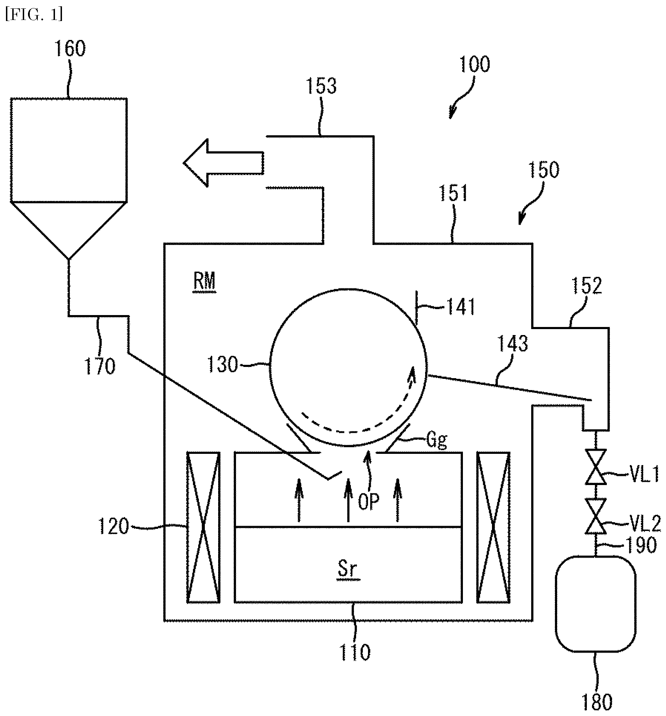

[FIG. 1] a schematic view of a production apparatus for silicon oxide powder according to an embodiment of the present invention.

### DESCRIPTION OF SYMBOLS

- 100: Vapor deposition apparatus
- 110: Crucible
- 120: Heater
- 130: Vapor deposition drum
- 141: Scraper
- 143: Particle guide
- 150: Chamber
- 151: Chamber main body
- 152: Collection part
- 153: Exhaust pipe
- 160: Raw material feed hopper
- 170: Raw material introduction pipe
- 180: Collection container
- 190: Collection pipe
- Gg: Gas guide
- OP: Opening
- RM: Deposition chamber
- Sr: Molten metal
- VL1: First valve
- VL2: Second valve

### DETAILED DESCRIPTION OF THE INVENTION

The silicon oxide according to the embodiment of the present invention is represented by MₓSiO_{y}. In the composition formula, M is at least one metal element selected from Li, Na, K, Mg, and Ca. In addition, y is in a range of more than 0.5 and less than 1.5, and x/y is in a range of 0 or more and less than 1. In addition, x is 0 or more. When x is more than 0, the composition is represented by MₓSiO_{y}. On the other hand, when x is 0, the composition formula is SiO_{y}. That is, the silicon oxide may be represented by MₓSiO_{y} or SiO_{y}. In the former case, y is in the range of more than 0.5 and less than 1.5, and x/y is in the range of more than 0 and less than 1. Here, y is preferably in the range of more than 0.7 and less than 1.3, more preferably in the range of more than 0.9 and less than 1.1, still more preferably in the range of more than 0.95 and less than 1.05, and particularly preferably in the range of more than 1.00 and less than 1.05. In addition, x/y is preferably in a range of more than 0.20 and less than 0.5, and more preferably in a range of more than 0.30 and less than 0.4 in a case where M is Li, and is preferably in a range of more than 0.8 and less than 1, and more preferably in a range of more than 0.9 and less than 1 in a case where M is Mg. On the other hand, in the latter case, y is in the range of more than 0.5 and less than 1.5, and x/y is 0. For convenience of explanation, the composition represented by MₓSiO_{y} may be referred to as a metal-element-containing silicon oxide, and the composition represented by SiO_{y} may be referred to as a metal-element-free silicon oxide. In addition, silicon oxide mainly formed from the metal element-containing silicon oxide is referred to as metal element-containing silicon oxide, and silicon oxide mainly formed from the metal element-free silicon oxide is referred to as metal element-free silicon oxide. The silicon oxide, that is, the metal element-containing silicon oxide or the metal element-free silicon oxide contains aluminum element as an impurity at a mass concentration of 150 ppm or less, iron at a mass concentration of less than 100 ppm, and copper at a mass concentration of less than 100 ppm. The shape of the silicon oxide according to the embodiment of the present invention is not limited, and may be a powder shape, a lump shape, or other shapes.

The median diameter of the above-described silicon oxide measured by a laser diffraction particle size distribution analyzer is preferably in the range of 0.5 µm or more and 30 µm or less, more preferably in the range of 1.0 µm or more and 20 µm more less, and still more preferably in the range of 1.5 µm or more and 10 µm or less. This is because when this silicon oxide is used as a negative electrode active material, not only the decrease in the coulomb ratio can be suppressed, but also pulverization can be suppressed to suppress the decrease in the cycle characteristics of the negative electrode.

Further, it is preferable that at least a part of the surface of the above-described silicon oxide is covered with a conductive carbon coating. In such a case, the mass percentage of carbon in the conductive carbon coating to the mass of silicon oxide is preferably in the range of 0.5 mass% or more and 20 mass% or less, more preferably in the range of 0.5 mass% or more and 10 mass% or less, and still more preferably in the range of 0.5 mass% or more and 5 mass% or less. This is because when this silicon oxide is used as a negative electrode active material, it is possible to impart good conductivity to the silicon oxide while maintaining good charge and discharge capacity, and it is possible to suppress side reactions of the silicon oxide.

The above-described silicon oxide preferably has a BET specific surface area in the range of 1 m²/g or more and 6 m²/g or less, more preferably in the range of 1. 5 m²/g or more and 5 m²/g or less, still more preferably in the range of 1. 5 m²/g or more and 4 m²/g or less, and particularly preferably in the range of 1. 5 m²/g or more and 3 m²/g or less. This is because when this silicon oxide is used as the negative electrode active material, it is possible to suppress the decrease in the coulomb efficiency while maintaining the output characteristics well.

The method for producing the silicon oxide, that is, the metal element-containing silicon oxide or the metal element-free silicon oxide according to the embodiment of the present invention will be described in detail below.

The raw material used for producing the metal element-free silicon oxide is a mixture of silicon and silicon dioxide. The silicon and silicon dioxide may be in the form of powder, in the form of a lump, or in other forms. On the other hand, the raw material used for producing the metal element-containing silicon oxide is a mixture of silicon and at least one compound selected from the group consisting of silicon dioxide, metal silicates and metal oxides. The silicon, silicon dioxide, metal silicate, and metal oxide may be in the form of powder, a lump, or other forms. Examples of the metal silicate include lithium silicate (for example, lithium disilicate Li₂Si₂O₅), sodium silicate (for example, sodium disilicate Na₂Si₂O₅), potassium silicate (for example, potassium disilicate K₂Si₂O₅), magnesium silicate (for example, magnesium silicate MgSiO₃), and calcium silicate (for example, calcium silicate CaSiO₃). The metal silicate may be a mixture of a metal oxide and silicon oxide. For example, lithium disilicate Li₂Si₂O₅ may be a mixture of Li₂O and 2 SiO₂, sodium disilicate Na₂Si₂O₅ may be a mixture of Na₂O and 2 SiO₂, potassium disilicate K₂Si₂O₅ may be a mixture of K₂O and 2 SiO₂, magnesium silicate MgSiO₃ may be a mixture of MgO and 2 SiO₂, and calcium silicate CaSiO₃ may be a mixture of CaO and 2 SiO₂. Examples of the metal oxides include lithium oxides (Li₂O, etc.), sodium oxides (Na₂O, etc.), potassium oxides (K₂O), magnesium oxides (MgO, etc.), and calcium oxides (CaO, etc.).

The metal element-containing silicon oxide or the metal element-free silicon oxide according to the embodiment of the present invention can be produced by the following production method. When the metal element-containing silicon oxide or the metal element-free silicon oxide is produced according to the following production method, any of the following pretreatments or preparations (1) to (4) is performed.
(1) Silicon is treated with water before the raw material is charged, and the aluminum element and the iron element contained in silicon are changed to a form which is less likely to be vaporized in the reduced pressure heating step.
(2) Water is added to the raw material, and while the raw material is granulated, the aluminum element and the iron element in the raw material are changed to a form which is less likely to be vaporized in the reduced pressure heating step.
(3) The mixing ratio of the various compounds is determined so that the aluminum element concentration is less than 50 ppm by mass concentration, the iron element concentration is less than 1000 ppm by mass concentration, and the copper element concentration is less than 200 ppm by mass concentration before the raw materials are charged.
(4) The mixing ratio of (A) silicon and (B) at least one compound selected from the group consisting of (b1) silicon dioxide, (b2) metal silicates and (b3) metal oxides is determined before charging the raw materials so that the element ratio O/Si during a reaction is in the range of more than 1 and less than 1.5.

In addition, the above-described production method is preferably performed using a vapor deposition apparatus 100 as shown in FIG. 1 from the viewpoint of manufacturing cost reduction and the like. Therefore, the vapor deposition apparatus 100 will be described first, and then the above-described production method will be described.

As shown in FIG. 1, the vapor deposition apparatus 100 is mainly composed of a crucible 110, a heater 120, a vapor deposition drum 130, a scraper 141, a particle guide 143, a chamber 150, a raw material feed hopper 160, a raw material introduction pipe 170, a collection container 180, a first valve VL1, and a second valve VL2.

The crucible 110 is a heat-resistant vessel having an opening in the center portion of the top wall as shown in FIG. 1, and is installed in the chamber 150. A through hole (not shown) is formed in one place of the peripheral portion of the top wall of the crucible 110, and a raw material introduction pipe 170 is inserted into the through hole. That is, the raw material in the raw material feed hopper 160 is fed to the crucible 110 through the raw material introduction pipe 170. A gas guide Gg is disposed on the upper side of the top wall of the crucible 110. The gas guide Gg is a member for guiding the source gas generated in the crucible 110 to the vapor deposition drum 130, and is installed on the upper surface of the top wall so as to surround the central portion of the top wall as shown in FIG. 1.

The heater 120 is for heating the crucible 110 to a high temperature, and is disposed so as to surround the outer periphery of the crucible 110.

The vapor deposition drum 130 is, for example, a cylindrical horizontal drum, and is disposed above the opening OP of the top wall of the crucible 110 as shown in FIG. 1, and the lower portion thereof is surrounded by the gas guide Gg. The vapor deposition drum 130 is rotated in one direction by a driving mechanism not shown. The vapor deposition drum 130 is provided with a temperature controller (not shown) for maintaining the outer peripheral surface at a constant temperature. The temperature controller cools the outer circumferential surface of the vapor deposition drum 130 to a temperature suitable for vapor deposition of the vapor deposition source gas by a cooling medium supplied from the outside. The temperature of the outer peripheral surface of the vapor deposition drum 130 can affect the crystallinity of the precipitate deposited on the precipitate remaining on the vapor deposition drum. If the temperature is too low, the texture structure of the precipitate may become too sparse, and if it is too high, crystal growth may proceed due to disproportionation reaction. The temperature is preferably 900 °C or lower, more preferably in the range of 150 °C or more and 800 °C or less, and particularly preferably in the range of 150 °C to 700 °C.

The scraper 141 is a member that serves to scrape off the thin film formed on the vapor deposition drum from the vapor deposition drum 130, and is disposed in the vicinity of the vapor deposition drum 130 as shown in FIG. 1. The flakes (active material particles) scraped off by the scraper 141 fall into the particle guide 143. The material of the scraper 141 affects the contamination of the active material particles with impurities. From the viewpoint of suppressing the influence, the material of the scraper 141 is preferably stainless steel or ceramics, and particularly preferably ceramics. The scraper 141 is preferably not in contact with the outer circumferential surface of the vapor deposition drum 130. This is because it is possible to prevent impurity contamination which may be caused by direct contact between the vapor deposition drum 130 and the scraper 141 from being mixed into the recovered active material particles.

The particle guide 143 is, for example, a vibrating type conveying member, and as shown in FIG. 1, is disposed so as to be inclined downward from the vicinity of the vapor deposition drum toward the collecting portion 152 of the chamber 150, and receives the flakes of thin film scraped off by the scraper 141 disposed above the particle guide and sends the flakes to the collecting portion 152 of the chamber 150.

As shown in FIG. 1, the chamber 150 is mainly formed of a chamber main body 151, a collection part 152, and an exhaust pipe 153. The chamber main body 151 is a box-shaped portion having a deposition chamber RM therein as shown in FIG. 1, and houses the crucible 110, the heater 120, the vapor deposition drum 130, the scraper 141, and the particle guide 143. As shown in FIG. 1, the collection part 152 is a part protruding outward from the sidewall of the chamber main body 151 and has a space communicating with the deposition chamber RM of the chamber main body 151. As described above, the tip portion of the particle guide 143 is positioned in the collection part 152.

The raw material feed hopper 160 is a raw material feeding source, and as shown in FIG. 1, an outlet thereof is connected to the raw material introduction pipe 170. That is, the raw material charged into the raw material feed hopper 160 is fed to the crucible 110 via the raw material introduction pipe 170 at an appropriate timing. The raw material fed to the crucible 110 is vaporized into a raw material gas after being formed into the molten metal Sr.

The raw material introduction pipe 170 is a round hole-shaped nozzle for feedng the solid raw material charged in the raw material feed hopper 160 to the crucible 110, and is disposed so as to direct its mouth upward at the center portion of the top plate portion of the crucible 110.

The collection container 180 is a vessel for collecting the flakes of thin film have passed through the first valve VL1 and the second valve VL2.

The first valve VL1 and the second valve VL2 are provided to adjust the amount of the flakes of thin film collected into the collection container 180 by opening and closing, and are provided in the collection pipe 190 connecting the collection portion 152 of the chamber 150 and the collection container 180.

The raw material (mixed powder or granulated material) is charged into the crucible 110 from the raw material feed hopper 160 through the raw material introduction pipe 170, or the raw material is directly charged into the crucible 110. The raw material of the metal element-free silicon oxide is as described above, and generates SiO gas as a raw material gas by being heated to a predetermined temperature. The predetermined temperature is a temperature between the melting point of silicon (1414 °C) and the melting point of silicon dioxide (1710 °C). On the other hand, the raw material of the metal element-containing silicon oxide is as described above, and generates a metal element-containing SiO gas as a raw material gas by being heated to a predetermined temperature. The predetermined temperature is a temperature between the melting temperature of silicon (1414 °C) and the melting temperature of the lithium-containing silicon oxide (melting temperature of Li₂Si₂O₅: 1033 °C, melting temperature of Na:Si₂O₅: 874 °C, melting temperature of K₂Si₂O₅: 1045 °C, melting temperature of MgSiO₃:1558 °C, melting temperature of CaSiO₃: 1544 °C).

After the raw material is charged into the crucible 110, the crucible 110 is heated by the heater 120 while the pressure in the deposition chamber RM is reduced. If the pressure in the deposition chamber RM is too high, the reaction of generating SiO gas from the raw material is less likely to occur. Therefore, the inner pressure of the deposition chamber RM is preferably 1000 Pa or lower, more preferably 750 Pa or lower, and particularly preferably 20 Pa or lower. The temperature in the deposition chamber RM affects the reaction rate of SiO. When the temperature is too low, the reaction rate is decreased, and when the temperature is too high, there is a concern that a side reaction due to melting of the raw material may proceed, or energy efficiency may be decreased. Further, the temperature may damage the crucible 110. From this viewpoint, the temperature in the deposition chamber RM is preferably in a range of 1000 °C or more and 1600 °C or less, more preferably in a range of 1100 °C or more and 1500 °C or less, and particularly preferably in a range of 1100 °C or more and 1400 °C or less.

By heating the raw material under reduced pressure as described above, a raw material gas is generated from the raw material in the crucible 110, and the raw material gas is fed to the vapor deposition drum 130 through the gas guide Gg. At this time, the vapor deposition drum 130 is rotationally driven by the driving source. The temperature of the outer peripheral surface of the vapor deposition drum 130 is set to be lower than the temperature in the deposition chamber RM. More specifically, the temperature is set to be lower than the condensation temperature of the raw material gas. By this setting, the raw material gas generated from the crucible 110 is deposited, precipitated, and accumulated on the outer peripheral surface of the rotating vapor deposition drum 130. Here, the vapor deposition drum 130 is rotated a plurality of times while the scraper 141 is kept in a standby state above the vapor deposition drum 130, thereby forming a laminated film on the vapor deposition drum 130. Thereafter, when the number of rotations of the vapor deposition drum 130 reaches a predetermined number, the scraper 141 is moved downward, and the laminated film is scraped off from the vapor deposition drum 130 by the scraper 141. The scraped pieces of the laminated film fall onto the particle guide 143 along the outer peripheral surface of the vapor deposition drum 130. Finally, the pieces of the laminated film are crushed to obtain the desired metal element-containing silicon oxide or the metal element-free silicon oxide.

### <Features of method for producing silicon oxide according to embodiment of the present invention>

In the method for producing silicon oxide according to the embodiment of the present invention, any of the above-described pretreatments or preparations (1) to (4) is performed. Therefore, in this method for producing silicon oxide, a metal element-containing silicon oxide or a metal element-free silicon oxide having a low aluminum element concentration, a low iron element concentration, and a low copper element concentration can be obtained. Therefore, when the metal element-containing silicon oxide or the metal element-free silicon oxide is used as a negative electrode active material, pulverization in the process of charge and discharge can be suppressed, and thus, a decrease in cycle characteristics of a battery can be suppressed.

Further, by the presence of the pretreatment (1) or (2), low-grade silicon or the like having a relatively high aluminum element concentration and iron element concentration can be used. Therefore, when the pretreatment (1) or (2) is performed, the cost of raw materials can be reduced.

The present invention will be described in more detail with reference to the following Working examples and Comparative Examples, which should not be construed as limiting the scope of the invention.

### WORKING EXAMPLE 1

### 1. Production of Silicon Oxide Powder

The following steps were carried out in order to produce the desired silicon oxide powder.

### (1) Raw Material Powder Preparation Step

Low-grade silicon (Si) powder (Al mass concentration 2000 ppm, Fe mass concentration 2500 ppm, Cu mass concentration 500 ppm, median diameter 2.5 µm) and lithium disilicate (Li₂Si₂O₅) powder (Al mass concentration 50 ppm, Fe mass concentration 15 ppm, Cu mass concentration 3 ppm, median diameter 5 µm) were prepared (see Table 1).

### (2) Mixing Step

The low-grade silicon (Si) powder and the lithium disilicate powder prepared in the above-described raw material powder preparation step were mixed at a mass ratio of 88.2:150 to prepare a mixed powder.

### (3) Wet Granulation Step

The mixed powder obtained in the above-described mixing step was granulated with water. In the mixed powder after granulation, the Al mass concentration was 772 ppm, the Fe mass concentration was 936 ppm, and the Cu mass concentration was 187 ppm (see Table 1). The Al mass concentration, the Fe mass concentration, and the Cu mass concentration were measured according to ICP emission spectrometry. The molar ratio of the oxygen element to the silicon element (O/Si) in the mixed powder was 0.97.

### (4) Silicon Oxide Powder Production Step

The lithium-containing silicon oxide was produced according to the above-described method for producing a silicon oxide powder using the vapor deposition apparatus 100 shown in FIG. 1. The heating temperature of the raw material was 1300 °C. The heating temperature of the raw material is equal to or higher than the melting point of lithium disilicate (1033 °C) and equal to or lower than the melting point of silicon (1414 °C). The composition of the lithium-containing silicon oxide powder finally obtained was LiₓSiO_{y}, where y was 1.03 and x/y was 0.35. In addition, in the lithium-containing silicon oxide powder, the Al mass concentration was 150 ppm, the Fe mass concentration was 45 ppm, and the Cu mass concentration was 1 ppm (see Table 1). Note that the Al mass concentration, the Fe mass concentration, and the Cu mass concentration were measured in accordance with the same method as described above.

### (5) Heat Treatment Step

The lump of lithium-containing silicon oxide obtained in the above-described silicon oxide powder production step was heat-treated at 600 °C in an argon atmosphere.

### (6) Pulverization Step

The lump of lithium-containing silicon oxide after the heat treatment was pulverized in the air by using a bead mill until the median diameter became about 5 µm, to obtain a target lithium-containing silicon oxide powder. The median diameter was measured using a laser diffraction-type particle size distribution analyzer (Mastersizer 3000, manufactured by Malvern Instruments Ltd.). The measurement conditions were as follows.
Dispersion medium: isopropyl alcohol (2-propanol)
Particle refractive index: 3.500
Particle absorption rate: 1.000
Dispersion medium refractive index: 1.390

### 2. Measurement of BET Specific Surface Area of Silicon Oxide Powder

The BET specific surface area of the lithium-containing silicon oxide powder was measured by a one point fluidizing method (p/p0=0.3) using Mascorb HM-1201 manufactured by Mountech Co., Ltd. In this measurement, nitrogen was used as the adsorbate, helium was used as the carrier gas, and liquid nitrogen was used as the cooling medium. In the actual measurement, a gas mixture of 30 vol% of nitrogen gas and 70 vol% of helium gas was used, and the flow rate of the gas mixture was 25 mL/min. The nitrogen gas was adsorbed on the lithium-containing silicon oxide powder by cooling the lithium-containing silicon oxide powder with liquid nitrogen, and then the nitrogen gas was desorbed by maintaining the lithium-containing silicon oxide powder at 300 °C for 30 minutes. As a result of the measurement, the BET specific surface area of the lithium-containing silicon oxide powder was found to be 2.1 m²/g.

### 3. Cycle characteristics of battery including negative electrode made of lithium-containing silicon oxide powder

### (1) Production of Battery

### (1-1) Preparation of Negative Electrode

The lithium-containing silicon oxide powder obtained as described above and natural graphite (median diameter: 12 µm) were mixed at a mass ratio of 10:90 to obtain a negative electrode active material. Next, the negative electrode active material, the aqueous binder solution, and the conductive auxiliary agent were charged into Awatori Rentaro (registered trademark) ARE-310 manufactured by Thinky Corporation so that the mass ratio of the negative electrode active material, sodium polyacrylate (binder), and Denka Black (registered trademark) (acetylene black as a conductive auxiliary agent) was 92:3:5, and then kneaded to prepare a slurry. Subsequently, the slurry was applied onto a 10 µm-thick copper foil, and the coating was pre-dried in the air at 80 °C. Then, the slurry-coated copper foil was punched into a disk shape having a 11 mm radius. The disc-shaped slurry-coated copper foil was dried in vacuum at 150 °C for 12 hours to obtain a desired negative electrode.

### (1-2) Production of Battery

A coin cell was produced using the above-described negative electrode, a Li foil as a counter electrode, a separator, and an electrolyte solution. A 20 µm thick polyethylene porous film is used as the separator. The solution prepared by dissolving lithium hexafluorophosphate (LiPF₆) in a mixed solution of ethylene carbonate (EC) and diethyl carbonate (DEC) at a volumetric ratio of 1:1, at a concentration of 1mol/L is used as the electrolyte solution.

### (2) Cycle Characteristics

The above-described coin cell was subjected to a charge and discharge test using a secondary battery charge and discharge tester manufactured by Electrofield Co., Ltd., and the capacity retention rate after 50 cycles (the capacity retention rate after 50 cycles is a value obtained by dividing the discharge capacity at the 50^{th} cycle by the discharge capacity at the first cycle and multiplying the resulting value by 100) was determined. The capacity retention rate was 75.7 % (see Table 1). In the charging and discharging test, the conditions for the first charging were "CC-CV 0.2C" and "10mV-0.01C", the conditions for the first discharging were "CC 0.2C" and "1.5V cut-off", the conditions for the second and subsequent charging were "CC-CV 1C" and "10 mV-0.010", and the conditions for the second and subsequent discharging were "CC 1C" and "1.5 V cut-off". Here, 1C current amount was calculated using a theoretical capacity calculated on the assumption that the discharge capacity of natural graphite is 360mAh and the discharge capacity of silicon oxide powder is 1900 mAh/g.

### WORKING EXAMPLE 2

A target lithium-containing silicon oxide powder was obtained according to the production method described in WORKING EXAMPLE 1 except that the low-grade silicon (Si) powder was replaced with a medium-grade silicon (Si) powder (Al mass concentration 1000 ppm, Fe mass concentration 600 ppm, Cu mass concentration 100 ppm, median diameter 2.5 µm). Additionally, BET Specific Surface Area of the lithium-containing silicon oxide powder was measured according to the method described in WORKING EXAMPLE 1, and a negative electrode was prepared from the lithium-containing silicon oxide powder to measure a capacity retention rate of the negative electrode according to the method described in WORKING EXAMPLE 1. In the mixed powder after granulation, the Al mass concentration was 402 ppm, the Fe mass concentration was 232 ppm, the Cu mass concentration was 39 ppm, and the molar ratio of oxygen element to silicon element (O/Si) in the mixed powder was 0.97. The composition of the lithium-containing silicon oxide powder finally obtained was LiₓSiO_{y}, where y was 1.03 and x/y was 0.34. In addition, in the lithium-containing silicon oxide powder, the Al mass concentration was 48 ppm, the Fe mass concentration was 25 ppm, and the Cu mass concentration was 1 ppm (see Table 1). The BET specific surface area of the lithium-containing silicon oxide powder was 2.3 m²/g, and the capacity retention rate of the negative electrode after 50 cycles was 78.3 % (see Table 1).

### WORKING EXAMPLE 3

A target lithium-containing silicon oxide powder was obtained according to the production method described in WORKING EXAMPLE 1 except that the low-grade silicon (Si) powder was replaced with a high-grade silicon (Si) powder (Al mass concentration 480 ppm, Fe mass concentration 300 ppm, Cu mass concentration 50 ppm, median diameter 2.5 µm). Additionally, BET Specific Surface Area of the lithium-containing silicon oxide powder was measured according to the method described in WORKING EXAMPLE 1, and a negative electrode was prepared from the lithium-containing silicon oxide powder to measure a capacity retention rate of the negative electrode according to the method described in WORKING EXAMPLE 1. In the mixed powder after granulation, the Al mass concentration was 209 ppm, the Fe mass concentration was 121 ppm, the Cu mass concentration was 20 ppm, and the molar ratio of oxygen element to silicon element (O/Si) in the mixed powder was 0.97. The composition of the lithium-containing silicon oxide powder finally obtained was LiₓSiO_{y}, where y was 1.03 and x/y was 0.38. In addition, in the lithium-containing silicon oxide powder, the Al mass concentration was 24 ppm, the Fe mass concentration was 20 ppm, and the Cu mass concentration was 2 ppm (see Table 1). The BET specific surface area of the lithium-containing silicon oxide powder was 2.2 m²/g, and the capacity retention rate of the negative electrode after 50 cycles was 81.2 % (see Table 1).

### WORKING EXAMPLE 4

A target lithium-containing silicon oxide powder was obtained according to the production method described in WORKING EXAMPLE 1 except that the low-grade silicon (Si) powder was replaced with a high-purity silicon (Si) powder (Al mass concentration 10 ppm, Fe mass concentration 40 ppm, Cu mass concentration 5 ppm, median diameter 2.5 µm), and the mixing step and the silicon oxide powder production step were performed without going through the wet granulation step (that is, the mixed powder obtained in the mixing step was charged into the crucible as it was). Additionally, BET Specific Surface Area of the lithium-containing silicon oxide powder was measured according to the method described in WORKING EXAMPLE 1, and a negative electrode was prepared from the lithium-containing silicon oxide powder to measure a capacity retention rate of the negative electrode according to the method described in WORKING EXAMPLE 1. In the mixed powder, the Al mass concentration was 35 ppm, the Fe mass concentration was 24 ppm, the Cu mass concentration was 4 ppm, and the molar ratio of the oxygen element to the silicon element (O/Si) in the mixed powder was 0.97. The composition of the lithium-containing silicon oxide powder finally obtained was LiₓSiO_{y}, where y was 1.02 and x/y was 0.36. In addition, in the lithium-containing silicon oxide powder, the Al mass concentration was 5 ppm, the Fe mass concentration was 15 ppm, and the Cu mass concentration was 1 ppm (see Table 1). The BET specific surface area of the lithium-containing silicon oxide powder was 2.3 m²/g, and the capacity retention rate of the negative electrode after 50 cycles was 83.4 % (see Table 1).

### (COMPARATIVE EXAMPLE 1)

A target lithium-containing silicon oxide powder was obtained according to the production method described in WORKING EXAMPLE 1 except that the low-grade silicon (Si) powder was replaced with a medium-grade silicon (Si) powder (Al mass concentration 1000 ppm, Fe mass concentration 600 ppm, Cu mass concentration 100 ppm, median diameter 2.5 µm), and the mixing step and the silicon oxide powder production step were performed without going through the wet granulation step (that is, the mixed powder obtained in the mixing step was charged into the crucible as it was). Additionally, BET Specific Surface Area of the lithium-containing silicon oxide powder was measured according to the method described in WORKING EXAMPLE 1, and a negative electrode was prepared from the lithium-containing silicon oxide powder to measure a capacity retention rate of the negative electrode according to the method described in WORKING EXAMPLE 1. In the mixed powder, the Al mass concentration was 402 ppm, the Fe mass concentration was 232 ppm, the Cu mass concentration was 39 ppm, and the molar ratio of the oxygen element to the silicon element (O / Si) in the mixed powder was 0.97. The composition of the lithium-containing silicon oxide powder finally obtained was LiₓSiO_{y}, where y was 1.03 and x/y was 0.36. In addition, in the lithium-containing silicon oxide powder, the Al mass concentration was 337 ppm, the Fe mass concentration was 30 ppm, and the Cu mass concentration was 1 ppm (see Table 1). The BET specific surface area of the obtained lithium-containing silicon oxide powder was 2.1 m²/g, and the capacity retention rate of the negative electrode after 50 cycles was 70.1 % (see Table 1).

### (COMPARATIVE EXAMPLE 2)

A target lithium-containing silicon oxide powder was obtained according to the production method described in WORKING EXAMPLE 1 except that the low-grade silicon(Si) powder was replaced with a high-grade silicon (Si) powder (Al mass concentration 480 ppm, Fe mass concentration 300 ppm, Cu mass concentration 50 ppm, median diameter 2.5 µm), and the mixing step and the silicon oxide powder production step were performed without going through the wet granulation step (that is, the mixed powder obtained in the mixing step was charged into the crucible as it was). Additionally, BET Specific Surface Area of the lithium-containing silicon oxide powder was measured according to the method described in WORKING EXAMPLE 1, and a negative electrode was prepared from the lithium-containing silicon oxide powder to measure a capacity retention rate of the negative electrode according to the method described in WORKING EXAMPLE 1. In the mixed powder, the Al mass concentration was 209 ppm, the Fe mass concentration was 121 ppm, the Cu mass concentration was 20 ppm, and the molar ratio of the oxygen element to the silicon element (O/Si) in the mixed powder was 0.97. The composition of the lithium-containing silicon oxide powder finally obtained was LiₓSiO_{y}, where y was 1.02 and x/y was 0.35. In addition, in the lithium-containing silicon oxide powder, the Al mass concentration was 205 ppm, the Fe mass concentration was 25 ppm, and the Cu mass concentration was 2 ppm (see Table 1). The BET specific surface area of the obtained lithium-containing silicon oxide powder was 2.2 m²/g, and the capacity retention rate of the negative electrode after 50 cycles was 71.2 % (see Table 1).

### (COMPARATIVE EXAMPLE 3)

A target lithium-containing silicon oxide powder was obtained according to the production method described in WORKING EXAMPLE 1 except that the low-grade silicon (Si) powder was replaced with a high-purity silicon (Si) powder (Al mass concentration 10 ppm, Fe mass concentration 40 ppm, Cu mass concentration 5 ppm, median diameter 2.5 µm), and copper (Cu) powder was added in an amount of 3 mass% of the total mass of the mixed powder, and the mixing step and the silicon oxide powder production step were performed without going through the wet granulation step (that is, the mixed powder obtained in the mixing step was charged into the crucible as it was). Additionally, BET Specific Surface Area of the lithium-containing silicon oxide powder was measured according to the method described in WORKING EXAMPLE 1, and a negative electrode was prepared from the lithium-containing silicon oxide powder to measure a capacity retention rate of the negative electrode according to the method described in WORKING EXAMPLE 1. The copper powder used was one that had passed through a sieve with a mesh size of 45 µm. In the mixed powder, the mass concentration of Al was 34 ppm, the mass concentration of Fe was 24 ppm, the mass concentration of Cu was 30004 ppm, and the molar ratio of the oxygen element to the silicon element (O/Si) in the mixed powder was 0.97. The composition of the lithium-containing silicon oxide powder finally obtained was LiₓSiO_{y}, where y was 1.04 and x/y was 0.34. In addition, in the lithium-containing silicon oxide powder, the Al mass concentration was 5 ppm, the Fe mass concentration was 14 ppm, and the Cu mass concentration was 3100 ppm (see Table 1). The BET specific surface area of the obtained lithium-containing silicon oxide powder was 2.4 m²/g, and the capacity retention rate of the negative electrode after 50 cycles was 82.0 % (see Table 1).

### (COMPARATIVE EXAMPLE 4)

A target lithium-containing silicon oxide powder was obtained according to the production method described in WORKING EXAMPLE 1 except that the low-grade silicon (Si) powder was replaced with a high-purity silicon (Si) powder (Al mass concentration 10 ppm, Fe mass concentration 40 ppm, Cu mass concentration 5 ppm, median diameter 2.5 µm), and copper (Cu) powder was added in an amount of 0.08 mass% of the total mass of the mixed powder, and the mixing step and the silicon oxide powder production step were performed without going through the wet granulation step (that is, the mixed powder obtained in the mixing step was charged into the crucible as it was). Additionally, BET Specific Surface Area of the lithium-containing silicon oxide powder was measured according to the method described in WORKING EXAMPLE 1, and a negative electrode was prepared from the lithium-containing silicon oxide powder to measure a capacity retention rate of the negative electrode according to the method described in WORKING EXAMPLE 1. The cupper powder used was one that had passed through a sieve with a mesh size of 45 µm. In the mixed powder, the mass concentration of Al was 35 ppm, the mass concentration of Fe was 24 ppm, the mass concentration of Cu was 804 ppm, and the molar ratio of the oxygen element to the silicon element (O/Si) in the mixed powder was 0.97. The composition of the lithium-containing silicon oxide powder finally obtained was LiₓSiO_{y}, where y was 1.04 and x/y was 0.39. In addition, in the lithium-containing silicon oxide powder, the Al mass concentration was 5 ppm, the Fe mass concentration was 15 ppm, and the Cu mass concentration was 110 ppm (see Table 1). The BET specific surface area of the obtained lithium-containing silicon oxide powder was 2.4 m²/g, and the capacity retention rate of the negative electrode after 50 cycles was 82.5 % (see Table 1).

### (COMPARATIVE EXAMPLE 5)

A target lithium-containing silicon oxide powder was obtained according to the production method described in WORKING EXAMPLE 1 except that the low-grade silicon (Si) powder was replaced with a high-purity silicon (Si) powder (Al mass concentration 10 ppm, Fe mass concentration 40 ppm, Cu mass concentration 5 ppm, median diameter 2.5 µm), and iron (Fe) powder was added to the high-purity silicon powder so that the iron powder is in an amount of 5 mass% of the total mass of the mixed powder, and the mixing step and the silicon oxide powder production step were performed without going through the wet granulation step (that is, the mixed powder obtained in the mixing step was charged into the crucible as it was). Additionally, BET Specific Surface Area of the lithium-containing silicon oxide powder was measured according to the method described in WORKING EXAMPLE 1, and a negative electrode was prepared from the lithium-containing silicon oxide powder to measure a capacity retention rate of the negative electrode according to the method described in WORKING EXAMPLE 1. The iron powder used was one that had passed through a sieve with a mesh size of 45 µm. In the mixed powder, the mass concentration of Al was 35 ppm, the mass concentration of Fe was 18555 ppm, the mass concentration of Cu was 4 ppm, and the molar ratio of the oxygen element to the silicon element (O/Si) in the mixed powder was 0.97. The composition of the lithium-containing silicon oxide powder finally obtained was LiₓSiO_{y}, where y was 1.03 and x/y was 0.35. In addition, in the lithium-containing silicon oxide powder, the Al mass concentration was 5 ppm, the Fe mass concentration was 250 ppm, and the Cu mass concentration was 2ppm (see Table 1). The BET specific surface area of the obtained lithium-containing silicon oxide powder was 2.3 m²/g, and the capacity retention rate of the negative electrode after 50 cycles was 80.2 % (see Table 1).

### (COMPARATIVE EXAMPLE 6)

A target lithium-containing silicon oxide powder was obtained according to the production method described in WORKING EXAMPLE 1 except that the low-grade silicon(Si) powder was replaced with a high-purity silicon (Si) powder (Al mass concentration 10 ppm, Fe mass concentration 40 ppm, Cu mass concentration 5 ppm, median diameter 2.5 µm), and iron (Fe) powder was added to the high-purity silicon powder so that the iron powder is in an amount of 1 mass% of the total mass of the mixed powder, and the mixing step and the silicon oxide powder production step was performed without going through the wet granulation step (that is, the mixed powder obtained in the mixing step was charged into the crucible as it was). Additionally, BET Specific Surface Area of the lithium-containing silicon oxide powder was measured according to the method described in WORKING EXAMPLE 1, and a negative electrode was prepared from the lithium-containing silicon oxide powder to measure a capacity retention rate of the negative electrode according to the method described in WORKING EXAMPLE 1. The iron powder used was one that had passed through a sieve with a mesh size of 45 µm. In the mixed powder, the mass concentration of Al was 35 ppm, the mass concentration of Fe was 3730 ppm, the mass concentration of Cu was 4 ppm, and the molar ratio of the oxygen element to the silicon element (O/Si) in the mixed powder was 0.97. The composition of the lithium-containing silicon oxide powder finally obtained was LiₓSiO_{y}, where y was 1.02 and x/y was 0.32. In addition, in the lithium-containing silicon oxide powder, the Al mass concentration was 5 ppm, the Fe mass concentration was 120 ppm, and the Cu mass concentration was 1 ppm (see Table 1). The BET specific surface area of the obtained lithium-containing silicon oxide powder was 2.2 m²/g, and the capacity retention rate of the negative electrode after 50 cycles was 81.0 % (see Table 1).

### WORKING EXAMPLE 5

A target magnesium-containing silicon oxide powder was obtained according to the production method described in WORKING EXAMPLE 1, except that the low-grade silicon (Si) powder was replaced with medium-grade silicon (Si) powder (Al mass concentration 1000 ppm, Fe mass concentration 600 ppm, Cu mass concentration 100 ppm, median diameter 2.5 µm), and the lithium disilicate (Li₂Si₂O₅) powder was replaced with magnesium silicate (MgSiOs) powder (Al mass concentration 50 ppm, Fe mass concentration 15 ppm, Cu mass concentration 3 ppm, median diameter 5 µm), and the medium-grade silicon oxide powder and magnesium silicate were mixed at a mass ratio of 58.8:100. Additionally, BET Specific Surface Area of the magnesium-containing silicon oxide powder was measured according to the method described in WORKING EXAMPLE 1, and a negative electrode was prepared from the magnesium-containing silicon oxide powder to measure a capacity retention rate of the negative electrode according to the method described in WORKING EXAMPLE 1. In the mixed powder after granulation, the Al mass concentration was 495 ppm, the Fe mass concentration was 231 ppm, the Cu mass concentration was 39 ppm, and the molar ratio of the oxygen element to the silicon element (O/Si) in the mixed powder was 0.97. The composition of the lithium-containing silicon oxide powder finally obtained was MgₓSiO_{y}, wherein y was 1.02 and x/y was 0.98. In addition, in the magnesium-containing silicon oxide powder, the Al mass concentration was 38 ppm, the Fe mass concentration was 27 ppm, and the Cu mass concentration was 2 ppm (see Table 1). The raw material heating temperature in the silicon oxide powder production step was 1500 °C. The raw material heating temperature is equal to or higher than the melting point of silicon (1414 °C) and equal to or lower than the melting point of magnesium silicate (1558 °C). The BET specific surface area of the obtained magnesium-containing silicon oxide powder was 2.3 m²/g, and the capacity retention rate of the negative electrode after 50 cycles was 75.3 % (see Table 1).

### (COMPARATIVE EXAMPLE 7)

A target magnesium-containing silicon oxide powder was obtained according to the production method described in WORKING EXAMPLE 6 except that the mixing step and the silicon oxide powder production step were performed without going through the wet granulation step (that is, the mixed powder obtained in the mixing step was charged into the crucible as it was). Additionally, BET Specific Surface Area of the magnesium-containing silicon oxide powder was measured according to the method described in WORKING EXAMPLE 1, and a negative electrode was prepared from the magnesium-containing silicon oxide powder to measure a capacity retention rate of the negative electrode according to the method described in WORKING EXAMPLE 1. In the mixed powder, the Al mass concentration was 495 ppm, the Fe mass concentration was 231 ppm, and the Cu mass concentration was 39 ppm (see Table 1). The composition of the lithium-containing silicon oxide powder finally obtained was MgₓSiO_{y}, wherein y was 1.03 and x/y was 0.95. In addition, in the magnesium-containing silicon oxide powder, the Al mass concentration was 345 ppm, the Fe mass concentration was 29 ppm, and the Cu mass concentration was 2 ppm (see Table 1). The raw material heating temperature in the silicon oxide powder production step was 1500 °C. The raw material heating temperature is equal to or higher than the melting point of silicon (1414 °C) and equal to or lower than the melting point of magnesium silicate (1558 °C). The BET specific surface area of the obtained magnesium-containing silicon oxide powder was 2.2 m²/g, and the capacity retention rate of the negative electrode after 50 cycles was 69.3 % (see Table 1).

### WORKING EXAMPLE 6

A target magnesium-containing silicon oxide powder was obtained according to the production method described in WORKING EXAMPLE 1 except that the low-grade silicon (Si) powder was replaced with a high-purity silicon (Si) powder (Al mass concentration 10 ppm, Fe mass concentration 40 ppm, Cu mass concentration 5 ppm, median diameter 2.5 µm), and the lithium disilicate (Li₂Si₂O₅) powder was replaced with a magnesium silicate (MgSiO₃) powder (Al mass concentration 50 ppm, Fe mass concentration 15 ppm, Cu mass concentration 3 ppm, median diameter 5 µm), and the high-purity silicon powder and magnesium silicate were mixed at a mass ratio of 47.8: 100, and the mixing step and the silicon oxide powder production step was performed without going through the wet granulation step (that is, the mixed powder obtained in the mixing step was charged into the crucible as it was). Additionally, BET Specific Surface Area of the magnesium-containing silicon oxide powder was measured according to the method described in WORKING EXAMPLE 1, and a negative electrode was prepared from the magnesium-containing silicon oxide powder to measure a capacity retention rate of the negative electrode according to the method described in WORKING EXAMPLE 1. In the mixed powder, the Al mass concentration was 31 ppm, the Fe mass concentration was 24 ppm, the Cu mass concentration was 4 ppm, and the molar ratio of the oxygen element to the silicon element (O/Si) in the mixed powder was 0.97. The composition of the lithium-containing silicon oxide powder finally obtained was MgₓSiO_{y}, wherein y was 1.01 and x/y was 0.94. In addition, in the magnesium-containing silicon oxide powder, the Al mass concentration was 5 ppm, the Fe mass concentration was 15 ppm, and the Cu mass concentration was 1 ppm (see Table 1). The raw material heating temperature in the silicon oxide powder production step was 1500 °C. The raw material heating temperature is equal to or higher than the melting point of silicon (1414 °C) and equal to or lower than the melting point of magnesium silicate (1558 °C). The BET specific surface area of the obtained magnesium-containing silicon oxide powder was 2.5 m²/g, and the capacity retention rate of the negative electrode after 50 cycles was 77.2 % (see Table 1).

### (COMPARATIVE EXAMPLE 8)

A target magnesium-containing silicon oxide powder was obtained according to the production method described in WORKING EXAMPLE 6 except that a copper (Cu) powder was added so as to be 3 mass% with respect to the total mass of the mixed powder. Additionally, BET Specific Surface Area of the magnesium-containing silicon oxide powder was measured according to the method described in WORKING EXAMPLE 1, and a negative electrode was prepared from the magnesium-containing silicon oxide powder to measure a capacity retention rate of the negative electrode according to the method described in WORKING EXAMPLE 1. The copper powder used was one that had passed through a sieve with a mesh size of 45 µm. In the mixed powder, the mass concentration of Al was 30 ppm, the mass concentration of Fe was 24 ppm, the mass concentration of Cu was 30004 ppm, and the molar ratio of the oxygen element to the silicon element (O/Si) in the mixed powder was 0.97. The composition of the lithium-containing silicon oxide powder finally obtained was MgₓSiO_{y}, wherein y was 1.03 and x/y was 0.97. In addition, in the magnesium-containing silicon oxide powder, the Al mass concentration was 5 ppm, the Fe mass concentration was 14 ppm, and the Cu mass concentration was 3100 ppm (see Table 1). The BET specific surface area of the obtained lithium-containing silicon oxide powder was 2.4 m²/g, and the capacity retention rate of the negative electrode after 50 cycles was 75.1 % (see Table 1).

### (COMPARATIVE EXAMPLE 9)

A target magnesium-containing silicon oxide powder was obtained according to the production method described in WORKING EXAMPLE 6 except that a copper (Cu) powder was added so as to be 0.08 mass% with respect to the total mass of the mixed powder. Additionally, BET Specific Surface Area of the magnesium-containing silicon oxide powder was measured according to the method described in WORKING EXAMPLE 1, and a negative electrode was prepared from the magnesium-containing silicon oxide powder to measure a capacity retention rate of the negative electrode according to the method described in WORKING EXAMPLE 1. The copper powder used was one that had passed through a sieve with a mesh size of 45 µm. In the mixed powder, the mass concentration of Al was 31 ppm, the mass concentration of Fe was 24 ppm, the mass concentration of Cu was 804 ppm, and the molar ratio of the oxygen element to the silicon element (O/Si) in the mixed powder was 0.97. The composition of the lithium-containing silicon oxide powder finally obtained was MgₓSiO_{y}, wherein y was 1.02 and x/y was 0.98. In addition, in the magnesium-containing silicon oxide powder, the Al mass concentration was 5 ppm, the Fe mass concentration was 15 ppm, and the Cu mass concentration was 120 ppm (see Table 1). The BET specific surface area of the obtained magnesium-containing silicon oxide powder was 2.2 m²/g, and the capacity retention rate of the negative electrode after 50 cycles was 75.6 % (see Table 1).

### (COMPARATIVE EXAMPLE 10)

A target magnesium-containing silicon oxide powder was obtained according to the production method described in WORKING EXAMPLE 6 except that an iron (Fe) powder was added to the high-purity silicon powder so as to be 5 mass% with respect to the total amount of the powder. Additionally, BET Specific Surface Area of the magnesium-containing silicon oxide powder was measured according to the method described in WORKING EXAMPLE 1, and a negative electrode was prepared from the magnesium-containing silicon oxide powder to measure a capacity retention rate of the negative electrode according to the method described in WORKING EXAMPLE 1. The iron powder used was one that had passed through a sieve with a mesh size of 45 µm. In the mixed powder, the mass concentration of Al was 31 ppm, the mass concentration of Fe was 18498 ppm, the mass concentration of Cu was 4 ppm, and the molar ratio of the oxygen element to the silicon element (O/Si) in the mixed powder was 0.97. The composition of the lithium-containing silicon oxide powder finally obtained was MgₓSiO_{y}, wherein y was 1.02 and x/y was 0.95. In addition, in the magnesium-containing silicon oxide powder, the Al mass concentration was 5 ppm, the Fe mass concentration was 290 ppm, and the Cu mass concentration was 2 ppm (see Table 1). The BET specific surface area of the obtained magnesium-containing silicon oxide powder was 2.3 m²/g, and the capacity retention rate of the negative electrode after 50 cycles was 74.0 % (see Table 1).

### (COMPARATIVE EXAMPLE 11)

A target magnesium-containing silicon oxide powder was obtained according to the production method described in WORKING EXAMPLE 6 except that an iron (Fe) powder was added to the high-purity silicon powder so as to be 1 mass% with respect to the total amount of the powder. Additionally, BET Specific Surface Area of the magnesium-containing silicon oxide powder was measured according to the method described in WORKING EXAMPLE 1, and a negative electrode was prepared from the magnesium-containing silicon oxide powder to measure a capacity retention rate of the negative electrode according to the method described in WORKING EXAMPLE 1. The iron powder used was one that had passed through a sieve with a mesh size of 45 µm. In the mixed powder, the mass concentration of Al was 31 ppm, the mass concentration of Fe was 3719 ppm, the mass concentration of Cu was 4 ppm, and the molar ratio of the oxygen element to the silicon element (O/Si) in the mixed powder was 0.97. The composition of the lithium-containing silicon oxide powder finally obtained was MgₓSiO_{y,} wherein y was 1.03 and x/y was 0.96. In addition, in the magnesium-containing silicon oxide powder, the Al mass concentration was 4 ppm, the Fe mass concentration was 130 ppm, and the Cu mass concentration was 1 ppm (see Table 1). The BET specific surface area of the obtained magnesium-containing silicon oxide powder was 2.4 m²/g, and the capacity retention rate of the negative electrode after 50 cycles was 74.6 % (see Table 1).

### WORKING EXAMPLE 7

A target lithium-containing silicon oxide powder was obtained according to the production method described in WORKING EXAMPLE 1 except that the low-grade silicon (Si) powder was brought into contact with water before the (2) mixing step, and the mixing step and the silicon oxide powder production step was performed without going through the wet granulation step (that is, the mixed powder obtained in the mixing step was charged into the crucible as it was). Additionally, BET Specific Surface Area of the lithium-containing silicon oxide powder was measured according to the method described in WORKING EXAMPLE 1, and a negative electrode was prepared from the lithium-containing silicon oxide powder to measure a capacity retention rate of the negative electrode according to the method described in WORKING EXAMPLE 1. In the above water treatment, 100g of the silicon powder was added to 1L purified water at 25 °C, and it was stirred in a 200 rpm for about 1 hour with a magnetic stirrer to disperse the silicon powder in the purified water and then most of the water was removed using a filter paper corresponding to Type 5C specified in JIS P 3801 and a suction filter, and the remaining wet silicon powder was dried in a shelf type hot air dryer set at 120 °C. In the mixed powder, the mass concentration of Al was 772 ppm, the mass concentration of Fe was 936 ppm, the mass concentration of Cu was 187 ppm, and the molar ratio of the oxygen element to the silicon element (O/Si) in the mixed powder was 0.97. The composition of the lithium-containing silicon oxide powder finally obtained was LiₓSiO_{y}, where y was 1.01 and x/y was 0.34. In addition, in the lithium-containing silicon oxide powder, the Al mass concentration was 150 ppm, the Fe mass concentration was 52 ppm, and the Cu mass concentration was 1 ppm (see Table 1). The BET specific surface area of the lithium-containing silicon oxide powder was 2.3 m²/g, and the capacity retention rate of the negative electrode after 50 cycles was 75.8 % (see Table 1).

### WORKING EXAMPLE 8

A target lithium-containing silicon oxide powder was obtained according to the production method described in WORKING EXAMPLE 2 except that the medium-grade silicon (Si) powder was brought into contact with water before the (2) mixing step, and the mixing step and the silicon oxide powder production step was performed without going through the wet granulation step (that is, the mixed powder obtained in the mixing step was charged into the crucible as it was). Additionally, BET Specific Surface Area of the lithium-containing silicon oxide powder was measured according to the method described in WORKING EXAMPLE 1, and a negative electrode was prepared from the lithium-containing silicon oxide powder to measure a capacity retention rate of the negative electrode according to the method described in WORKING EXAMPLE 1. In the above water treatment, 100g of the silicon powder was added to 1L purified water at 25 °C, and it was stirred in a 200 rpm for about 1 hour with a magnetic stirrer to disperse the silicon powder in the purified water and then most of the water was removed using a filter paper corresponding to Type 5C specified in JIS P 3801 and a suction filter, and the remaining wet silicon powder was dried in a shelf type hot air dryer set at 120 °C. In the mixed powder, the mass concentration of Al was 402 ppm, the mass concentration of Fe was 232 ppm, the mass concentration of Cu was 39 ppm, and the molar ratio of the oxygen element to the silicon element (O/Si) in the mixed powder was 0.97. The composition of the lithium-containing silicon oxide powder finally obtained was LiₓSiO_{y}, where y was 1.03 and x/y was 0.36. In addition, in the lithium-containing silicon oxide powder, the Al mass concentration was 62 ppm, the Fe mass concentration was 39 ppm, and the Cu mass concentration was 1 ppm (see Table 1). The BET specific surface area of the lithium-containing silicon oxide powder was 2.2 m²/g, and the capacity retention rate of the negative electrode after 50 cycles was 77.8 % (see Table 1).

### WORKING EXAMPLE 9

A target lithium-containing silicon oxide powder was obtained according to the production method described in WORKING EXAMPLE 3 except that the high-grade silicon (Si) powder was brought into contact with water before the (2) mixing step, and the mixing step and the silicon oxide powder production step was performed without going through the wet granulation step (that is, the mixed powder obtained in the mixing step was charged into the crucible as it was). Additionally, BET Specific Surface Area of the lithium-containing silicon oxide powder was measured according to the method described in WORKING EXAMPLE 1, and a negative electrode was prepared from the lithium-containing silicon oxide powder to measure a capacity retention rate of the negative electrode according to the method described in WORKING EXAMPLE 1. In the above water treatment, 100g of the silicon powder was added to 1L purified water at 25 °C, and it was stirred in a 200 rpm for about 1 hour with a magnetic stirrer to disperse the silicon powder in the purified water and then most of the water was removed using a filter paper corresponding to Type 5C specified in JIS P 3801 and a suction filter, and the remaining wet silicon powder was dried in a shelf type hot air dryer set at 120 °C. In the mixed powder, the mass concentration of Al was 209 ppm, the mass concentration of Fe was 121 ppm, the mass concentration of Cu was 20 ppm, and the molar ratio of the oxygen element to the silicon element (O/Si) in the mixed powder was 0.97. The composition of the lithium-containing silicon oxide powder finally obtained was LiₓSiO_{y}, where y was 1.02 and x/y was 0.35. In addition, in the lithium-containing silicon oxide powder, the Al mass concentration was 32 ppm, the Fe mass concentration was 25 ppm, and the Cu mass concentration was 1 ppm (see Table 1). The BET specific surface area of the lithium-containing silicon oxide powder was 2.3 m²/g, and the capacity retention rate of the negative electrode after 50 cycles was 79.8 % (see Table 1).

### WORKING EXAMPLE 10

A target lithium-containing silicon oxide powder was obtained according to the production method described in WORKING EXAMPLE 1 except that the mixed powder was prepared by mixing the low-grade silicon (Si) powder and the lithium disilicate powder at a mass ratio of 79.8:150 in the mixing step, and the silicon oxide powder production step was performed from the mixing step without going through the wet granulation step (that is, the mixed powder obtained in the mixing step was charged into the crucible as it was). Additionally, BET Specific Surface Area of the lithium-containing silicon oxide powder was measured according to the method described in WORKING EXAMPLE 1, and a negative electrode was prepared from the lithium-containing silicon oxide powder to measure a capacity retention rate of the negative electrode according to the method described in WORKING EXAMPLE 1. In the mixed powder, the Al mass concentration was 772 ppm, the Fe mass concentration was 879 ppm, the Cu mass concentration was 176 ppm, and the molar ratio of the oxygen element to the silicon element (O/Si) in the mixed powder was 1.03. The composition of the lithium-containing silicon oxide powder finally obtained was LiₓSiO_{y}, where y was 1.02 and x/y was 0.36. In addition, in the lithium-containing silicon oxide powder, the Al mass concentration was 148 ppm, the Fe mass concentration was 25 ppm, and the Cu mass concentration was 1 ppm (see Table 1). The BET specific surface area of the lithium-containing silicon oxide powder was 2.2 m²/g, and the capacity retention rate of the negative electrode after 50 cycles was 75.8 % (see Table 1).

### WORKING EXAMPLE 11

A target lithium-containing silicon oxide powder was obtained according to the production method described in WORKING EXAMPLE 2 except that the mixed powder was prepared by mixing the medium-grade silicon (Si) powder and the lithium disilicate powder at a mass ratio of 79.8:150 in the mixing step, and the silicon oxide powder production step was performed from the mixing step without going through the wet granulation step (that is, the mixed powder obtained in the mixing step was charged into the crucible as it was). Additionally, BET Specific Surface Area of the lithium-containing silicon oxide powder was measured according to the method described in WORKING EXAMPLE 1, and a negative electrode was prepared from the lithium-containing silicon oxide powder to measure a capacity retention rate of the negative electrode according to the method described in WORKING EXAMPLE 1. In the mixed powder, the Al mass concentration was 402 ppm, the Fe mass concentration was 218 ppm, the Cu mass concentration was 37 ppm, and the molar ratio of the oxygen element to the silicon element (O/Si) in the mixed powder was 1.03. The composition of the lithium-containing silicon oxide powder finally obtained was LiₓSiO_{y}, where y was 1.03 and x/y was 0.34. In addition, in the lithium-containing silicon oxide powder, the Al mass concentration was 50 ppm, the Fe mass concentration was 24 ppm, and the Cu mass concentration was 1 ppm (see Table 1). The BET specific surface area of the lithium-containing silicon oxide powder was 2.2 m²/g, and the capacity retention rate of the negative electrode after 50 cycles was 78.1 % (see Table 1).

### WORKING EXAMPLE 12

A target lithium-containing silicon oxide powder was obtained according to the production method described in WORKING EXAMPLE 3 except that the mixed powder was prepared by mixing the high-grade silicon (Si) powder and the lithium disilicate powder at a mass ratio of 79.8:150 in the mixing step, and the silicon oxide powder production step was performed from the mixing step without going through the wet granulation step (that is, the mixed powder obtained in the mixing step was charged into the crucible as it was). Additionally, BET Specific Surface Area of the lithium-containing silicon oxide powder was measured according to the method described in WORKING EXAMPLE 1, and a negative electrode was prepared from the lithium-containing silicon oxide powder to measure a capacity retention rate of the negative electrode according to the method described in WORKING EXAMPLE 1. In the mixed powder, the Al mass concentration was 209 ppm, the Fe mass concentration was 114 ppm, the Cu mass concentration was 19 ppm, and the molar ratio of the oxygen element to the silicon element (O/Si) in the mixed powder was 1.03. The composition of the lithium-containing silicon oxide powder finally obtained was LiₓSiO_{y}, where y was 1.03 and x/y was 0.36. In addition, in the lithium-containing silicon oxide powder, the Al mass concentration was 27 ppm, the Fe mass concentration was 20 ppm, and the Cu mass concentration was 1 ppm (see Table 1). The BET specific surface area of the lithium-containing silicon oxide powder was 2.3 m²/g, and the capacity retention rate of the negative electrode after 50 cycles was 81.0 % (see Table 1).

### WORKING EXAMPLE 13

A target lithium-containing silicon oxide powder was obtained according to the production method described in WORKING EXAMPLE 2 except that the mixed powder was prepared by mixing the medium-grade silicon (Si) powder and the lithium disilicate powder at a mass ratio of 56:150 in the mixing step, and the silicon oxide powder production step was performed from the mixing step without going through the wet granulation step (that is, the mixed powder obtained in the mixing step was charged into the crucible as it was). Additionally, BET Specific Surface Area of the lithium-containing silicon oxide powder was measured according to the method described in WORKING EXAMPLE 1, and a negative electrode was prepared from the lithium-containing silicon oxide powder to measure a capacity retention rate of the negative electrode according to the method described in WORKING EXAMPLE 1. In the mixed powder, the Al mass concentration was 402 ppm, the Fe mass concentration was 174 ppm, the Cu mass concentration was 29 ppm, and the molar ratio of the oxygen element to the silicon element (O/Si) in the mixed powder was 1.25. The composition of the lithium-containing silicon oxide powder finally obtained was LiₓSiO_{y}, where y was 1.04 and x/y was 0.35. In addition, in the lithium-containing silicon oxide powder, the Al mass concentration was 40 ppm, the Fe mass concentration was 21 ppm, and the Cu mass concentration was 1 ppm (see Table 1). The BET specific surface area of the lithium-containing silicon oxide powder was 2.3 m²/g, and the capacity retention rate of the negative electrode after 50 cycles was 79.1 % (see Table 1).

### (COMPARATIVE EXAMPLE 12)

An attempt was made to obtain a target lithium-containing silicon oxide powder according to the production method described in WORKING EXAMPLE 2 except that in the mixing step, the medium-grade silicon (Si) powder and the lithium disilicate powder were mixed at a mass ratio of 37.2:150 to prepare a mixed powder, and the silicon oxide powder production step was performed from the mixing step without going through the wet granulation step (i.e., the mixed powder obtained in the mixing step was charged into the crucible as is). However, the reaction rate was significantly decreased, and the target lithium-containing silicon oxide powder could not be obtained. In the mixed powder, the Al mass concentration was 402 ppm, the Fe mass concentration was 132 ppm, the Cu mass concentration was 22 ppm, and the molar ratio of the oxygen element to the silicon element (O/Si) in the mixed powder was 1.5.

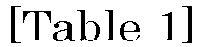

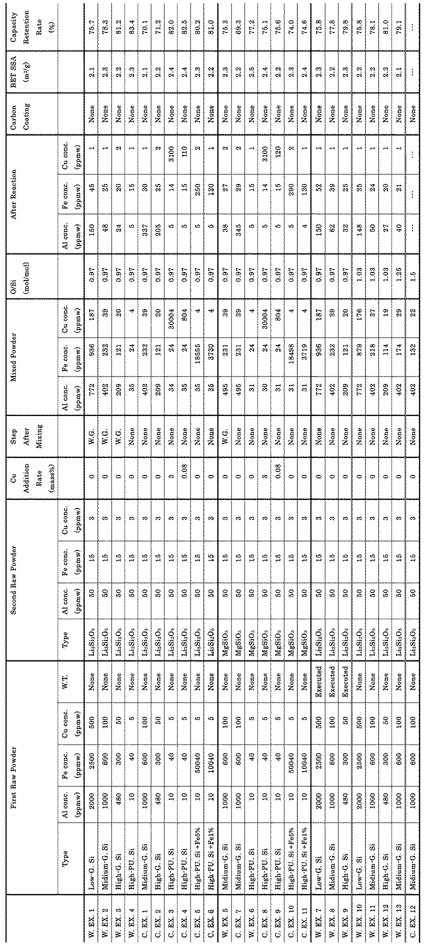

### (Discussion)

As is clear from Table 1, the negative electrode formed from the silicon oxide powder produced through the wet granulation had a higher capacity retention rate than the negative electrode formed from the silicon oxide powder produced without the wet granulation. In addition, it was found that the capacity retention rate increased as the aluminum element concentration, the iron element concentration, and the copper element concentration in the obtained silicon oxide powder decreased (see WORKING EXAMPLES 1 to 3).

Additionally, as is clear from Table 1, the negative electrode formed from the silicon oxide powder produced by setting the aluminum-element mass concentration to less than 50 ppm, the iron-element concentration to less than 1000 ppm, and the copper-element concentration to less than 200 ppm in the mixed material had a higher capacity-maintaining rate than the negative electrode formed from the silicon oxide powder produced by setting the aluminum-element mass concentration to 50 ppm or more, the iron-element concentration to 1000 ppm or more, and the copper-element concentration to 200 ppm or more. It was also found that the lower the aluminum element concentration, the iron element concentration, and the copper element concentration in the obtained silicon oxide powder, the higher the capacity retention rate (see WORKING EXAMPLE 4).

Additionally, as is clear from Table 1, the negative electrode formed from the silicon oxide powder produced through the water treatment of the silicon powder had a higher capacity retention rate than the negative electrode formed from the silicon oxide powder produced without the water treatment of the silicon powder. It was also found that the capacity retention rate increases as the aluminum element concentration, the iron element concentration, and the copper element concentration in the obtained silicon oxide powder decrease (see WORKING EXAMPLES 7 to 9).

Additionally, as is clear from Table 1, the negative electrode formed from the silicon oxide powder produced by setting the O/Si ratio in the mixed raw material to more than 1 and less than 1.5 had a higher capacity retention rate than the negative electrode formed from the silicon oxide powder produced by setting the O/Si ratio in the mixed raw material to 1 or less. It was also found that the capacity retention rate increases as the aluminum element concentration, the iron element concentration, and the copper element concentration in the obtained silicon oxide powder decrease (see WORKING EXAMPLES 7 to 12).

### WORKING EXAMPLE 14

The lithium-containing silicon oxide powder obtained in WORKING EXAMPLE 1 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 1.9 m²/g, and the capacity retention rate of the negative electrode after 50 cycles was 80.5 % (see Table 2).

### WORKING EXAMPLE 15

The lithium-containing silicon oxide powder obtained in WORKING EXAMPLE 2 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.1 m²/g, and the capacity retention rate of the negative electrode after 50 cycles was 82.5 % (see Table 2).

### WORKING EXAMPLE 16

The lithium-containing silicon oxide powder obtained in WORKING EXAMPLE 3 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.0 m²/g, and the capacity retention rate of the negative electrode after 50 cycles was 87.3 % (see Table 2).

### WORKING EXAMPLE 17

The lithium-containing silicon oxide powder obtained in WORKING EXAMPLE 4 was charged into a rotary kiln, and a carbon coating treatment was applied to the lithium-containing silicon oxide powder by thermal CVD in which argon gas and propane gas were allowed to flow at at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.1 m²/g, and the capacity retention rate of the negative electrode after 50 cycles was 88.9 % (see Table 2).

### (COMPARATIVE EXAMPLE 13)

The lithium-containing silicon oxide powder obtained in COMPARATIVE EXAMPLE 1 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 1.9 m²/g, and the capacity retention rate of the negative electrode after 50 cycles was 78.9 % (see Table 2).

### (COMPARATIVE EXAMPLE 14)

The lithium-containing silicon oxide powder obtained in COMPARATIVE EXAMPLE 2 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.0 m²/g, and the capacity retention rate of the negative electrode after 50 cycles was 79.6 % (see Table 2).

### (COMPARATIVE EXAMPLE 15)

The lithium-containing silicon oxide powder obtained in COMPARATIVE EXAMPLE 3 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.2 m²/g, and the capacity retention rate of the negative electrode after 50 cycles was 87.1 % (see Table 2).

### (COMPARATIVE EXAMPLE 16)

The lithium-containing silicon oxide powder obtained in COMPARATIVE EXAMPLE 4 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.2m²/g, and the capacity retention rate of the negative electrode after 50 cycles was 87.5 % (see Table 2).

### (COMPARATIVE EXAMPLE 17)

The lithium-containing silicon oxide powder obtained in COMPARATIVE EXAMPLE 5 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1.The BET specific surface area of the obtained carbon-coated lithium-containing silicon oxide powder was 2.1 m²/g, and the capacity retention rate of the negative electrode after 50 cycles was 85.4 % (see Table 2).

### (COMPARATIVE EXAMPLE 18)

The lithium-containing silicon oxide powder obtained in COMPARATIVE EXAMPLE 6 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.0 m²/g, and the capacity retention rate of the negative electrode after 50 cycles was 86.0 % (see Table 2).

### WORKING EXAMPLE 18

The silicon oxide powder obtained in WORKING EXAMPLE 5 was charged into a rotary kiln, and a carbon coating treatment was applied to the magnesium-containing silicon oxide powder by thermal CVD in which argon gas and propane gas were allowed to flow at 700 °C. The mass ratio of carbon to the mass of the magnesium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated magnesium-containing silicon oxide powder was measured according to the method described in WORKING EXAMPLE 1, and a negative electrode was prepared from the carbon-coated magnesium-containing silicon oxide powder to measure a capacity retention rate of the negative electrode according to the method described in WORKING EXAMPLE 1. The BET specific surface area of the obtained carbon-coated magnesium-containing silicon oxide powder was 2.1 m²/g, and the capacity retention rate of the negative electrode after 50 cycles was 81.2 % (see Table 2).

### (COMPARATIVE EXAMPLE 19)

The magnesium-containing silicon oxide powder obtained in COMPARATIVE EXAMPLE 7 was charged into a rotary kiln, and a carbon coating treatment was applied to the magnesium-containing silicon oxide powder by thermal CVD in which argon gas and propane gas were allowed to flow at 700 °C. The mass ratio of carbon to the mass of the magnesium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated magnesium-containing silicon oxide powder was measured according to the method described in WORKING EXAMPLE 1, and a negative electrode was prepared from the carbon-coated magnesium-containing silicon oxide powder to measure a capacity retention rate of the negative electrode according to the method described in WORKING EXAMPLE 1. The BET specific surface area of the obtained carbon-coated magnesium-containing silicon oxide powder was 2.0 m²/g, and the capacity retention rate of the negative electrode after 50 cycles was 78.3 % (see Table 2).

### WORKING EXAMPLE 19

The lithium-containing silicon oxide powder obtained in WORKING EXAMPLE 6 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.3 m²/g, and the capacity retention rate of the negative electrode after 50 cycles was 83.3 % (see Table 2).

### (COMPARATIVE EXAMPLE 20)

The lithium-containing silicon oxide powder obtained in COMPARATIVE EXAMPLE 8 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.2 m²/g, and the capacity retention rate of the negative electrode after 50 cycles was 81.0 % (see Table 2).

### (COMPARATIVE EXAMPLE 21)

The lithium-containing silicon oxide powder obtained in COMPARATIVE EXAMPLE 9 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.0 m²/g, and the capacity retention rate of the negative electrode after 50 cycles was 81.5 % (see Table 2).

### (COMPARATIVE EXAMPLE 22)

The lithium-containing silicon oxide powder obtained in COMPARATIVE EXAMPLE 10 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.1 m²/g, and the capacity retention rate of the negative electrode after 50 cycles was 80.0 % (see Table 2).

### (COMPARATIVE EXAMPLE 23)

The lithium-containing silicon oxide powder obtained in COMPARATIVE EXAMPLE 11 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.2 m²/g, and the capacity retention rate of the negative electrode after 50 cycles was 80.2 % (see Table 2).

### WORKING EXAMPLE 20

The lithium-containing silicon oxide powder obtained in WORKING EXAMPLE 7 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.1 m²/g, and the capacity retention rate of the negative electrode after 50 cycles was 80.4 % (see Table 2).

### WORKING EXAMPLE 21

The lithium-containing silicon oxide powder obtained in WORKING EXAMPLE 8 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.0 m²/g, and the capacity retention rate of the negative electrode after 50 cycles was 82.0 % (see Table 2).

### WORKING EXAMPLE 22

The lithium-containing silicon oxide powder obtained in WORKING EXAMPLE 9 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.1 m²/g, and the capacity retention rate of the negative electrode after 50 cycles was 85.1 % (see Table 2).

### WORKING EXAMPLE 23

The lithium-containing silicon oxide powder obtained in WORKING EXAMPLE 10 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.0 m²/g, and the capacity retention rate of the negative electrode after 50 cycles was 80.6 % (see Table 2).

### WORKING EXAMPLE 24

The lithium-containing silicon oxide powder obtained in WORKING EXAMPLE 11 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.0 m²/g, and the capacity retention rate of the negative electrode after 50 cycles was 82.3 % (see Table 2).

### WORKING EXAMPLE 25

The lithium-containing silicon oxide powder obtained in WORKING EXAMPLE 12 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 2.1 m²/g, and the capacity retention rate of the negative electrode after 50 cycles was 86.2 % (see Table 2).

### WORKING EXAMPLE 26

The lithium-containing silicon oxide powder obtained in WORKING EXAMPLE 13 was charged into a rotary kiln, and a carbon coating treatment was applied to the lithium-containing silicon oxide powder by thermal CVD in which argon gas and propane gas were allowed to flow at 700 °C. The mass ratio of carbon to the mass of the lithium-containing silicon oxide powder was 2 mass%. The mass ratio was calculated from the results of the amount of carbon quantitatively evaluated by analyzing carbon dioxide gas by an oxygen-flow combustion-infrared adsorption method using a carbon concentration analyzer (CS400 manufactured by Leco Corporation). Then, BET specific surface area of the carbon-coated lithium-containing silicon oxide powder was measured according to the method described in WORKING EXAMPLE 1, and a negative electrode was prepared from the carbon-coated lithium-containing silicon oxide powder to measure a capacity retention rate of the negative electrode according to the method described in WORKING EXAMPLE 1. The BET specific surface area of the obtained carbon-coated lithium-containing silicon oxide powder was 1.9 m²/g, and the capacity retention rate of the negative electrode after 50 cycles was 83.8 % (see Table 2).

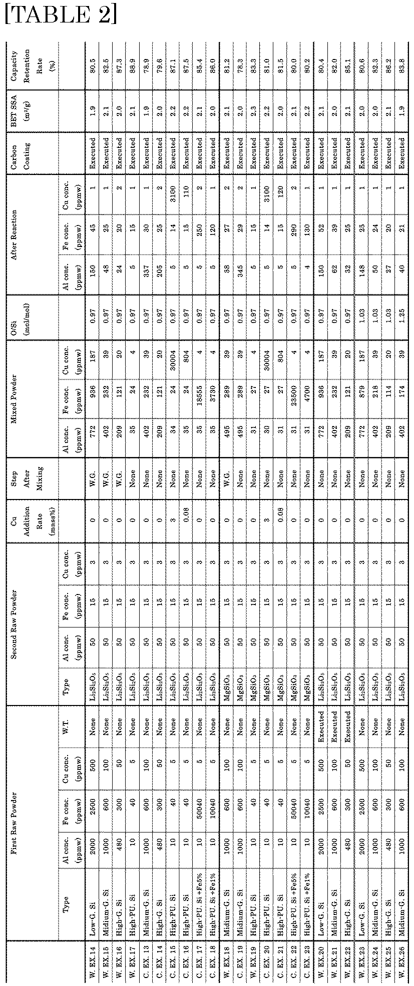

### (Discussion)

As is clear from Tables 1 and 2, the capacity retention rate of the negative electrode formed from the carbon-coated silicon oxide powder was higher than that of the silicon oxide powder not coated with carbon.

## Claims

1. A method for producing silicon oxide, comprising:
a water treatment step for bringing silicon into contact with water and then drying the silicon to obtain water-treated silicon;
a reduced pressure heating step for heating (a)the water-treated silicon together with at least one compound selected from the group consisting of (b1) silicon dioxide, (b2) metal silicate and (b3) metal oxide under reduced pressure to generate a gas; and
a sublimation step for sublimating the gas to obtain a solid material.

2. A method for producing silicon oxide, comprising:
a granulation step for granulating a mixture containing (A) silicon and (B) at least one compound selected from the group consisting of (b1) silicon dioxide, (b2) metal silicate and (b3) metal oxide with water to obtain a granulated material;
a reduced pressure heating step for heating the granulated material under reduced pressure to generate a gas from the granulated material; and
a sublimation step for sublimating the gas to obtain a solid material.

3. A method for producing silicon oxide, comprising:
a charging step for charging (A) silicon and (B) at least one compound selected from the group consisting of (b1) silicon dioxide, (b2) metal silicate and (b3) metal oxide into a heat-resistant vessel so that the element ratio O/Si during a reaction is in the range of more than 1 and less than 1.5;
a reduced pressure heating step for heating the compound charged into the heat-resistant vessel under reduced pressure to generate a gas from the compound; and
a sublimation step for sublimating the gas to obtain a solid material.

4. The method for producing silicon oxide according to any one of claims 1 through 3,
wherein the heating temperature in the reduced pressure heating step is represented as T_{R}, the melting temperature of the (A) silicon is represented as T_{A}, the lowest melting temperature among the melting temperatures of the (b1) melting temperature of silicon dioxide, the (b2) melting temperature of the metal silicate, and the (b3) melting temperature of metal oxide is represented as T_{BL}, and the highest melting temperature among the melting temperatures of the (b1) melting temperature of silicon dioxide, the (b2) melting temperature of metal silicate, and the (b3) melting temperature of metal oxide is represented as T_{BH}, T_{R} is set to satisfy T_{A}<T_{R}<T_{BL} when T_{A}<T_{BL} is satisfied, T_{R} is set to satisfy T_{BL}<T_{R}<T_{A} when T_{BL}<T_{A}<T_{BH} is satisfied, and T_{R} is set to satisfy T_{BH}<T_{R}<T_{A} when T_{BH}<T_{A} is satisfied.

5. A silicon oxide comprising:
the composition represented by MₓSiO_{y} (wherein M is at least one kind of metal element selected from Li, Na, K, Mg and Ca, y is in the range of more than 0.5 and less than 1.5, x/y is in the range of 0 or more and less than 1, and x is more than 0),
the concentration of aluminum element as an impurity is 150 ppm or less by mass concentration, the concentration of iron element is less than 100 ppm, and the concentration of copper element is less than 100 ppm.

6. The silicon oxide according to claim 5, wherein a median diameter measured by a laser diffraction particle size distribution analyzer is in a range of 0.5 µ m or more and 30 µm or less.

7. The silicon oxide according to claim 5, wherein at least a part of the surface is covered with a conductive carbon coating.

8. The silicon oxide according to claim 7, wherein a mass percentage of carbon in the conductive carbon coating to a mass of the silicon oxide is in a range of 0.5 mass% or more and 20 mass% or less.

9. The silicon oxide according to claim 5, wherein a BET specific surface area is in a range of 1 m²/g or more and 6m²/g or less.
